(19) **Europäisches Patentamt**
**European Patent Office**
**Office européen des brevets**

(11) **EP 1 777 647 A1**

(12) **EUROPEAN PATENT APPLICATION**

(43) Date of publication:
**25.04.2007 Bulletin 2007/17**

(51) Int Cl.:
***G06Q 10/00*** *(2006.01)*

(21) Application number: **05022405.4**

(22) Date of filing: **13.10.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **Ford Global Technologies, LLC Dearborn, MI 48126 (US)**

(72) Inventor: **Sidiropoulos, Nikitas 413 23 Göteborg (SE)**

(74) Representative: **Hammond, Andrew David et al Valea AB Lindholmspiren 5 417 56 Göteborg (SE)**

(54) **Transmission life prediction method**

(57) The present invention relates to a method for performing fatigue analysis and service life prediction of automotive vehicle transmission components. The method comprises the steps of producing a customer population through: defining driver profiles and driving behaviours; defining environments in which drivers of said driver profiles are driving; defining driver - environment combinations through combining said driver profiles and said defined environments; defining road conditions. Furthermore an algorithm is used for random selection of two driver -environment combinations and a component population is defined. A component failure prediction is performed by comparing the duty values for the customer and component populations such that a failure is predicted if the customer duty value is larger than the component duty value.

Fig. 1

**Description**

TECHNICAL FIELD

The present invention relates to a method for performing fatigue analysis, and service life prediction of automotive vehicle transmission components. Further, the present invention also concerns a method for the production of an automotive vehicle transmission component using the method for performing fatigue analysis and service life prediction. Moreover, the present invention also concerns a computer program, which is stored on a computer readable storage media, and which is suitable to perform the method for performing fatigue analysis and service life prediction of automotive vehicle transmission components. Further, the present invention also concerns a computer program product, which is directly loadable into the internal memory of a digital computer, and which comprises a computer program for performing the method for performing fatigue analysis and service life prediction of automotive vehicle transmission components when the program is run on the computer.

BACKGROUND OF THE INVENTION

In early phases of a new automotive vehicle project it is difficult to set a good target for dimensions of components. This is due to insufficient information of the final start of production status. Vehicle mules and engines, if available at all, often have a status too preliminary to be able to be used for verification purposes. Also, at this stage, new transmission components with correct material status are not available, thus making it hard to run rig tests to see if the components are adequate for the new application. It is therefore essential to be able to make an early prediction of the duty cycle that the components will be exposed to once the vehicle is released, and to be able to perform a failure prediction of the components during the life cycle of the vehicle.

US2003065482 discloses techniques used in connection with determining a health indicator (HI) of a component, such as that of an aircraft component. The HI is determined using condition indicators (CIs) which parameterize characteristics about a component minimizing possibility of a false alarm. Different algorithms are disclosed which may be used in determining one or more CIs. The HI may be determined using a normalized CI value. Techniques are also described in connection with selecting particular CIs that provide for maximizing separation between HI classifications. Given a particular HI at a point in time for a component, techniques are described for predicting a future state or health of the component using a Kalman filter. Techniques are described for estimating data values as an alternative to performing data acquisitions, as may be used when there is no pre-existing data.

Although US2003065482 discloses techniques for estimating data values as an alternative to performing data acquisitions, as may be used when there is no pre-existing data these techniques are not suited for automotive vehicle projects.

SUMMARY OF THE INVENTION

An object of the present invention is to provide an improved method for performing fatigue analysis and service life prediction of automotive vehicle transmission components which is potentially less costly to implement and has improved operating characteristics.

According to a first aspect of the present invention, there is provided a method for performing fatigue analysis and service life prediction of automotive vehicle transmission components.

The invention is of advantage in that inclusion of the steps of producing a customer population through: defining driver profiles and driving behaviours; defining environments in which drivers of said driver profiles are driving; defining driver - environment combinations through combining said driver profiles and said defined environments; defining road conditions; using an algorithm for random selection of two driver - environment combinations defining a component population; fitting the customer and component populations with appropriate distribution functions; producing duty values for the customer and component populations respectively; performing a component failure prediction by comparing the duty values for the customer and component populations such that a failure is predicted if the customer duty value is larger than the component duty value, makes it possible to analyse component fatigue in the field and to predict service life because an entire population of customers may be generated in such a way that small changes in automotive vehicle or engine status will not have much influence on the final result.

Preferred embodiments are listed in the dependent claims.

According to a second aspect of the present invention, there is provided a method for the production of an automotive vehicle transmission component, which comprises the steps of: a) performing fatigue analysis and service life prediction for a proposed component design using the method according to the first aspect; and b) if the prediction of step a produces an acceptable result for said proposed component design producing said component in accordance with the proposed design.

According to a third aspect of the present invention, there is provided a computer program, which is stored on a computer readable storage media, and which is suitable to perform the above method when it is run on a digital computer.

According to a fourth aspect of the present invention, there is provided a computer program product, which is directly loadable into the internal memory of a digital computer, and which comprises a computer program for performing the above method when said program is run on said computer.

It will be appreciated that features of the invention are susceptible to being combined in any combination without departing from the scope of the invention as defined by the accompany claims.

BRIEF DESCRIPTION OF THE DRAWINGS

By way of example only, embodiments of the present invention will now be described with reference to the accompanying drawings wherein:

Figure 1 shows an example of a probability density function of a customer population and a component population; and

Figure 2 shows an example of failure analysis for component X in car variant Y for an entire customer population, where the total failure rate after 350 000 km is 1.6%.

DETAILED DESCRIPTION OF PREFERRED EMBODIMENTS

With the method in accordance with the present invention it is possible to analyze component fatigue in the field and predict service life of automotive vehicle transmission components. An entire population of automotive vehicle customers is generated in such a way that small changes in vehicle or engine status later in a project will not have much influence on the final result. The method for producing the population may be used throughout an entire project, so that if necessary, the population may be refined as start of production is approaching.

In accordance with the method there is also provided the opportunity to compare known test procedures with the created customer population and by this way to understand how the test procedures correlate to real customer usage.

There are two main ways one may choose to produce the input data for the population, namely by measurements or by simulations. The input data needed depends on which component that is to be analyzed, but the data collecting process is basically the same. In the following it is assumed that a preferred way for vehicle measurements for transmission fatigue analysis is done by half shaft strain gauges. Simulations are done in a Matlab - Simulink environment. (MATLAB and Simulink are registered trademarks of The MathWorks, Inc.) Regardless of which way the data is collected, the input is the same. The novel method may also be used for any failure mode and any transmission component.

In the following the novel method for creating a customer population will be described in detail step by step.

The method for performing fatigue analysis and service life prediction of automotive vehicle transmission components has different main elements. The first one is, as mentioned above, a novel method for producing a customer population. Different driving environments and driver profiles have been analysed in all major sales regions in order to conclude whether they are representative for customers of the vehicle brand and type. Based on these studies the novel method of producing a customer population has been defined. The method is composed of four steps:

The first step is to define driver types and to determine the distribution between the driver types in the population. Since it is not possible to define every unique customer type, three driver profiles are defined: Aggressive profile; Moderate profile; and Mild profile. Moreover, three ways of driving behaviour are defined: Aggressive driving; Moderate driving; and Mild driving.

Aggressive driving is assumed to reflect a 90%-ile customer (90%-ile in this case used in the sense of reflecting aggressiveness level of driving behaviour, including e.g. gas and clutch pedal management that equals the $90^{th}$ driver of 100 where the $100^{th}$ is the most aggressive).

Moderate driving is assumed to reflect a 50 - 70%-ile customer (50 - 70%-ile in this case used in the sense of reflecting aggressiveness level of driving behaviour, including e.g. gas and clutch pedal management that equals the $50^{th}$ - $70^{th}$ driver of 100 where the $100^{th}$ is the most aggressive).

Mild driving is assumed to reflect a <50%-ile customer (<50%-ile in this case used in the sense of reflecting aggressiveness level of driving behaviour, including e.g. gas and clutch pedal management, that is lower than the $50^{th}$ driver of 100 where the $100^{th}$ is the most aggressive).

As mentioned above, in the first step three driver profiles and three driving behaviours are defined: Aggressive, moderate and mild. By mixing behaviours for each profile, the driver types are produced. By way of example, aggressive profile may consist of 40% aggressive driving, 50% moderate driving and 10% mild driving. Moderate profile may consist of 10% aggressive driving, 70% moderate driving and 20% mild driving, whilst mild profile may consist of 5% aggressive driving, 20% moderate driving and 75% mild driving. Driver type distributions are defined as a share of the population: 10% aggressive, 40% moderate and 50% mild drivers.

The definitions above may be used for the entire fleet or if needed more sales region specific definitions may be used. In order to obtain the specific shares a combination of black box measurements and questionnaire may be used, where the customer driving behaviour is logged and compared to the customer's opinion about their driving style.

The second step in the process of producing a customer population is to define the environment in which the customers are driving. In order to do so driving environments have been studied in all major sales regions and extensive measurements and analysis have been done in order to conclude whether the different environments are representative for customers of the vehicle brand and type. Available customer surveys in different sales regions have also been consulted in the process of defining the different environment categories. It has also been of great focus to include critical driving situations in specific environments and also to capture common driving ways of low percentile customers so that the population as a whole represents the customers in a satisfactory way.

This has been possible to accomplish by installing Flight Recorders, so called black boxes, in customer vehicles in different sales regions. The black box loggings have been compared with results from measurements of full instrument equipped vehicles that have been extensively tested in the environments that are used in the process of generating a customer population.

Based on the correlation work the following environments and specific driving situations have been defined to be used in the population generation.

Eight environment / driving situations are defined: City - City road loop (inner city), Rural - Rural road loop (plain highway and rural road mix), Mountainous - Mountainous road loop (hilly highway and rural road mix), Grave) - Gravel road loop (mix of gravel roads 30-70 km/h), Highway - Plain and hilly highway mix, Autobahn - Main test track loops (hard accelerations and top speed driving), Hill start - Test track hill start (16% hill / 20% hill driving mix) and trailer driving - Test track full load + trailer driving (mix of handling track / city track / gravel track including 20% hill start). Load data are produced on test tracks and in the field.

The parts from the test track are driven according to a customized durability test code, e.g. LPD (trailer and hill start) and LPH (high speed). The latter constitutes forced driving with lots of wide open throttle parts, not usual customer like. However by including these parts it is assured that extreme driving situations are included in the life cycle prediction and at the same time the correlation work assure that the occurrence of these driving situations is according to real customer usage.

The driver types and environments are combined to a total of 20 combinations with specific frequency.

By combining the driver and the environment definitions, sixty driver-environment combinations ($2 \times 30$) are defined with unique environment distributions and frequency of occurrence: Road to Rig driver; Mix driver; Plain city driver; Plain autobahn driver; Plain rural road driver; Plain mountainous road driver; City driver; City-trailer driver; Rural driver; Rural-trailer driver; Mountainous driver; Mountainous-trailer driver; Gravel driver; Gravel-trailer driver; Highway driver; Highway-trailer driver; Autobahn driver; Autobahn-trailer driver; Trailer driver; Average driver.

Road conditions are defined: Dry, wet and snow / ice. The distributions are defined as share of total distance, e.g.: 60% dry, 30% wet, 10% snow / ice. By defining the total number of drivers in the population, the result of step 1 - 4 is a 4-D matrix where each driver-environment combination consists of 9 driver profile - road condition combinations and where each of these are specified for each environment and frequency of occurrence.

In case winter conditions cannot be generated (due to lack of real winter conditions on roads for measurements or insufficient tyre model data for simulations), wet conditions are used instead.

In order to reflect real world conditions, an algorithm is used for random selection of two driver-environment combinations. The algorithm is used when a population is created for long driving distances e.g. above 200 000 km. All combinations are paired randomly with another and the average accumulated load for the two paired combinations is then used in the final population. This is done in order to reflect a vehicle change which is equivalent to a switch between two drivers for the same vehicle. For example, the method suggests that a vehicle might be driven half the distance by an aggressive city driver and half the distance by a mild highway driver, something which is a possibility in reality as well.

In order to correlate the new method for generating a customer population, extensive black box measurements in customer vehicles have been performed in different sales regions around the world. These measurements have been compared to the new method and the old method, for producing the required percentile customer profile, (in this case the 90%-ile). In this method a certain mix of environments with a predefined distribution is assumed to produce the required percentile profile.

When customer population settings are set, the loads for each driver in the population may be calculated. In the following, existing calculation methodology for different components will be discussed briefly, including definitions of terms.

Gear life is based on torque / stress collective (or spectrum), which is a type of load collective. For gear fatigue, "torque collective" means dividing the time signal for the engine torque (e.g. the torque that the clutch transfers) or the propeller shaft torque into different torque classes (normally of approximately 10 Nm).

With the aid of information about rotational speed (rpm), the number of load cycles for each torque class is then compiled per gear. There is a difference between engine rotation (rpm) and load cycle. For a planetary train, for example, a planetary gear may experience several load changes (load cycles) per revolution. In order to make a complete calculation of gear life, it is necessary to know the number of load changes in the form of the number of load cycles per torque class (see the below description of Revolutions at Torque level).

The above is sufficient information for surface fatigue, but additional information is required for root fatigue. Here it is also necessary to know when the transition from drive-to coast torque takes place. Via Rainflow-counting on the engine torque time signal for example, supplementary load data may be obtained in the form of the number of occurrences of drive - coast torque amplitudes. For propeller shaft angle gear root fatigue analysis, it is more important to include the forward - rear drive torque transition and the number of occurrences of forward - rear drive torque amplitudes.

Rainflow-counting is not required for surface fatigue analysis, as different flanks are loaded during- drive and coast or forward - and rear drive torque respectively. In general if the coast / rear drive torque parts of the duty cycle are negligible, it is sufficient to produce the number of load cycles per revolution to obtain a well estimated input spectrum to the life analysis.

For service life analysis of shafts, the same load data is required as for gear wheels. The stress analysis differs however as the load is more general, with contributions from rotating bending torque (for shafts in the gearbox, varying rotating bending torque also occurs due to different force directions when different gears are engaged), shaft torque and shearing forces.

For bearing life it is necessary to know the number of rotations (or the time) per torque class, per engine rotational speed (rpm) class and per gear. In addition, it is possible to supplement with data from the torque transfer history, i.e. for the service life calculation the same information is used as for gear wheels plus speeds.

For housings, the number of changes under load in the form of torque load variations is the determining factor. For the gearbox, it is necessary to know the engine's torque load variations per gear in order to know how the transfer of power takes place via bearings to the housing. Rainflow-counting for the engine torque signal is sufficient to produce load data. Unlike the situation with gears, it is not necessary to ascertain the number of load cycles per torque class, as fatigue of the gearbox housing is not dependent on rotation (the gearbox housing does not rotate). In addition to torque variations from the engine, it is also necessary to know the outer load variations that are transferred via bushings and rods.

For the bevel gear and final drive housing, knowledge about the propeller shaft's torque load variation is required. For the differential housing, it is necessary to know the number of load cycles per ring gear torque class per distribution class, as well as the torque variation for the front and rear drive shafts. Distribution class means different variants of torque distribution between front and rear drive shafts.

With four-wheel drive systems, torque is transferred via the differential housing to the bevel gear and the propeller shaft, as well as via the differential shaft to the front drive shafts. When the distribution between these varies (i.e. front-rear distribution), the load on the housing also varies as the "load concentration wanders" from one point to another on the differential housing.

To calculate the service life of splines, the same parameters as for housings are the determining factors, i.e. shaft torque load variations per gear. During the stress analysis, it may be necessary to consider the impact of rotating bending torque, e.g. due to incorrect alignment.

It is possible to present the load collective in a number of different ways, e.g. Level Crossings (the number of times a level is exceeded), Range Pair (the number of pairs exceeding the signal scope) or Rainflow (detection of number of load changes from one level to another). If the number of rotations per torque class is also to be used, Revolutions at Torque Level is used.

The term "duty value" is widely used in the vehicle industry as a measure of accumulated load on, for example, rotating components such as cylindrical or conical gears in vehicle transmissions.

The equation for a straight S-N curve in a log-log diagram may be written $S=A \times N^B$. On the basis of this, it is possible to define Basquin's equation $S=Sf \times (2N)^b$ or in modified form $N \times S^{We}=k$. The calculation method for torque-based Duty Value is based on Basquin's equation but is applied in the torque dimension instead of being applied to stresses. The designations for the above equations are as follows: S - stress amplitude

A - material-dependent constant (intersection with the y-axis in the log-log diagram)
Sf- material constant ($A=2^b \times Sf$)
N - number of cycles until rupture
B - direction coefficient on approximated straight S-N curve in a line-log diagram
($B = b = -1 / We$ where We is the Wöhler exponent)
k - material-dependent constant ($k=A^{We}$)

The adopted model is used together with Miner-Palmgren's equation $\Sigma(n_k / N_k)$ in order to calculate a Duty Value via the summation of Duty Value per torque class.

If a torque collective is divided into m number of classes k, a total Duty Value may be written as

$$DV_T = \sum_{k=1}^{m} n_k \ast (( T_k - delta)^{We} + (T_k + delta)^{We}) / 2$$

$DV_T$ - Duty Value in the torque dimension
m - number of torque classes in torque spectrum
$n_k$ - number of cycles in class k (for gears = number of loading cycles, for housings, splines & shafts = number of load changes in the form of torque variations)
$T_k$ - mid torque level of class k
delta - torque class width / 2
We - Wöhler exponent

$$\text{Also } DV_T = \sum_{k=1}^{m} n_k \ast T_k^{We} \text{ may be used for faster approximation.}$$

The unit for Duty Value is consequently [Nm$^{We}$].

Duty Value may only be used for relative comparisons between different measurements, and not for absolute life. It is a measure of accumulated load. The above equation for Duty Value derives from a linear relationship between stress and torque. In reality, stress may be non-linear in relation to torque, which in practice entails a different Wöhler curve. In other words, non-linear relationships mean that DV gives poorer accuracy. If the result of the Wöhler test is produced and the correct incline is obtained for the Wöhler curve, Miner-Palmgren may be used for direct damage calculation. If the relationship between torque and stress is known, however, the equation for Duty Value may also be used to summarise Duty Value per stress class instead of per torque class. In this case Duty Value is defined by:

$$DV_S = \sum_{k=1}^{m} n_k \ast (( S_k - delta)^{We} + (S_k + delta)^{We}) / 2$$

$$\text{Also } DV_S = \sum_{k=1}^{m} n_k \ast S_k^{We}$$

may be used for faster approximation.

$DV_S$ - Duty Value in the stress dimension
m - number of stress classes in the stress spectrum
$n_k$ - number of cycles in class k (for gears = number of loading cycles, for housings, splines & shafts = number of load changes in the form of stress variations)
$S_k$ - mid stress level of class k
delta - stress class width / 2
We - Wöhler exponent

The unit for Duty Value is consequently [Pa$^{We}$]. It is important to understand that the Wöhler exponent in the torque-based equation differs from the stress-based equation if the stress-torque relationship is non-linear.

The closely related term "Duty Cycle" is the name of the actual cycle load sequence that gives rise to Duty Value.

In an initial system analysis, the finite element method (FEM) is used to calculate each component's deformation at a particular load. This also includes geometric non-linear interaction effects between included components. In step two, a local stress analysis is carried out using calculated deformations as boundary conditions. Linearly elastic material is normally used. By repeating this process for a certain component, a stress-torque relationship may be obtained and the damage on the same component (and installation) for another load spectrum may be calculated as long as the maximum torque level is not exceeded from the first step.

Step three involves a damage analysis (in the S-N dimension) in accordance with Miner-Palmgren's linear damage theory where the estimated local stress is scaled in accordance with the applicable load variation. Rainflow-counting may be used here on a time signal in order first to find the number of cycles for each amplitude level and associated mean stress. This is then converted to the number of cycles at each load level after transition to the corresponding amplitude with mean stress zero (for example according to Goodman). Compensation is normally made for locally plasticizing material (according to Neuber).

After summation according to Miner-Palmgren the result is obtained, namely a figure for damage [%] or life [%]. Life is indicated in relation to a theoretical damage until rupture with given boundary conditions & material data on the components included in the calculations. Life is the inverse of damage, e.g. a component that has undergone a test where the damage has been calculated to 50% has a life of 200%, i.e. it is possible to run an identical test twice before the component breaks.

In the following there will be described a method for performing service life prediction of gears in the torque dimension: The method is applicable for other component / failure modes as well. By calculating accumulated torque load or Duty Value $DV_T$ for each torque load spectrum or Rainflow matrix of each individual environment, a $DV_T$ / km matrix is retrieved. By using the population settings, the $DV_T$ for any customer or component percentile and vice versa is obtained by inverting the chosen cumulative distribution or using the cdf function (cumulative distribution function) respectively. The failure prediction is performed for a certain customer percentile or for the entire population and for a specified distance of usage. A random population of customer and component $DV_T$ :s are compared. The random populations are created based on distribution function of choice and corresponding parameters. If a customer $DV_T$ is higher than a component $DV_T$, a failure is predicted.

The following section describes in more detail the procedure of the method for fatigue analysis and service life prediction of a component, based on the new method for producing a customer population and by using the calculation methodology described in previous sections. The procedure may be used for any component and failure mode where linear elastic fatigue analysis is applicable.

The input data for the customer population is a Duty Value $DV_T$ / km matrix calculated from the torque load spectrum of each individual route as previously described. For failure modes where the load history has to be accounted for, a time signal analysis is performed instead, where the Rainflow matrix is produced. A definition for a comparison figure or Duty Value has been developed for this type of analysis.

The first step in the calculation is to calculate the number of cycles for each amplitude level and associated mean stress. This is then converted to the number of cycles at each load level after transition to the corresponding amplitude with mean stress zero. Smith-Watson-Topper is used when calculating in the torque dimension since no material data is necessary in the equation. Once the reversed load amplitude (zero mean stress) and associated load cycles are produced, the following definition of a Duty Value may be used in order to compare the accumulated load between different time signals:

$DV_T = \Sigma\, n_k * T_{Rk}{}^{\wedge We}$ where $T_R$ is the reversed torque amplitude.

Two alternative ways have been described above of how Duty Value is produced for the different driving environment parts. The process of calculating a comparison figure (Duty Value) between different environment parts in the population in accordance with the two alternatives may simplified be described as:

Alt 1) Load time history -> Rainflow matrix -> Mean stress compensation -> Duty Value.
Alt 2) Load time history -> Load spectrum (e.g. Revs at Torque level) -> Duty Value.

A simplified example of how the accumulated load for a driver-environment combination is produced is given as follows. Each route time signal is evaluated by Rainflow classification and a total Rainflow matrix is summed from which a Duty Value including mean load compensation by Smith Watson Topper (SWT) is calculated.

By repeating the above procedure by using the population settings for all driver-environment combinations, a set of Duty Values is received corresponding to each combination in the customer population. Different Wöhler exponents can be chosen in the Duty Value calculation to investigate different failure modes.

By complementing each Duty Value with the number of drivers in each combination, the customer population is produced. In the same way, a component population is produced by calculating equivalent Duty Value on torque load history based on rig tests where the component is run to failure. An alternative way may be used if the analysis is done in an early project phase where there are no physical components available in case the component is new. By using the load history for the driver-environment combinations in the population and data for the new geometry in combination with material data from similar predecessors, the life limit may be obtained by running a local stress analysis described in the previous section. This step is further explained in the following.

A third alternative for failure analysis in the torque dimension is available by reversing the procedure. By using geometry and material data, a set of virtual torque load spectra may be produced corresponding to the life limit. Thereafter Duty Value's may be calculated for each spectrum and a component population is obtained.

Once both populations are produced, they may be fitted with an appropriate distribution function. Most commonly used are the following functions:

- 2-parameter Weibull
- 3-parameter Weibull
- Normal
- Lognormal
- Exponential

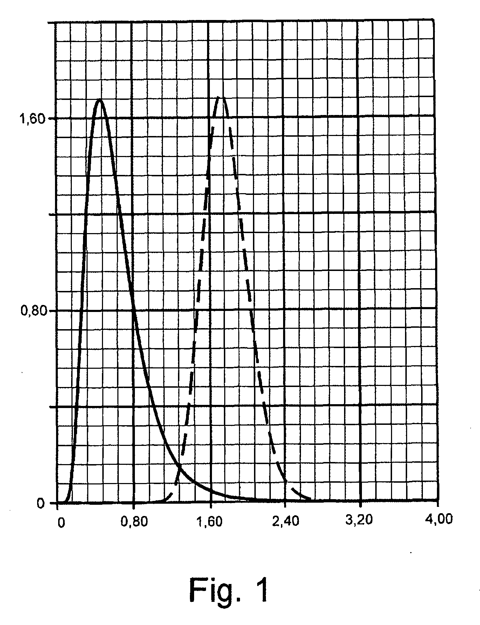

E.g. both the customer and the component population may be fitted with lognormal distribution. Figure 1 shows an example of probability density function of a customer population (the full line to the left in the plot) and a component population (the dashed line to the right in the plot) with accumulated load / Duty Value on the x-axle. Failures will occur in the common area.

When the fit procedure is finished, the Duty Value $DV_T$ of any customer %-ile or vice versa may be obtained by inverting the chosen cumulative distribution function or using the cdf function respectively. It is possible to compare for example a verification test procedure with the population to understand which customer %-ile the test procedure corresponds to. By measuring a limited amount of test cycles and calculating Duty Value, the comparison may be done. In summation, it is possible to predict how severe a release test will be for a certain component in comparison to real customer usage, before the actual material of the new component is available. This is of course an estimation that will not include non-linear stress-torque relationships.

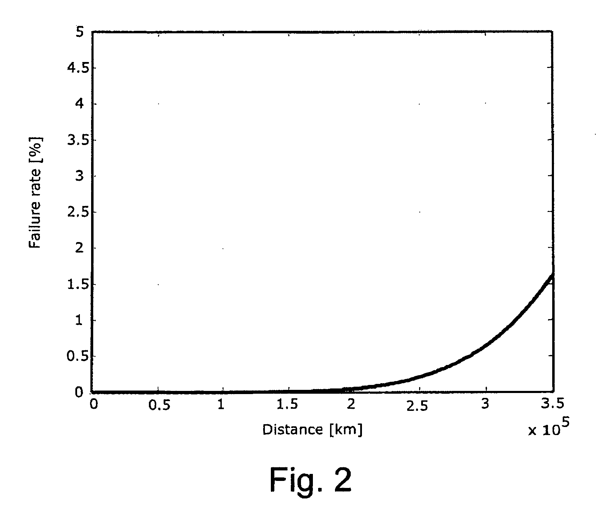

By adding the component population, a failure prediction may be performed. The prediction may be done for the entire population, for a certain %-ile or any measured load spectrum, for example from a test procedure as mentioned above. In the failure prediction code, a random population of the customer and component Duty Values are compared based on the calculated distribution parameters chosen in the previous step. For a certain %-ile or load spectrum analysis, the procedure is the same except that the customer population in this case consists of only one value, the equivalent Duty Value to the %-ile that is to be analysed. By interpolating from 0 to the desired total distance, a failure prediction as shown in figure 2 is obtained. The assumption made in this analysis is that all customers drive the same distance at all times. This is of course not the case in the field but the analysis still gives a good indication of whether the failure rate will be acceptable or not.

In the following there will be described a method for performing service life prediction in the stress dimension: The torque load spectra are transformed to stress load spectra by using local stress analysis. This is done for each component with unique torque-stress relationship. The customer population is built up by converting torque / km spectra to stress / km spectra. In the same way, the component population is produced by using torque load spectra from failure tests and converting them to stress spectra. The accumulated stress load or Duty Value $DV_s$ is calculated for each spectrum and two populations are obtained. The failure prediction is performed as described in the previous section with respect to torque. In early project phases, data for the new geometry and material data from similar predecessors are used instead of new component failure test results. The predicted life limit is calculated for each customer load spectrum in the population.

In the following there will be described in more detail the method for failure prediction in the stress / strain dimension.

The fatigue analysis and failure prediction in the stress / strain dimension can also be performed in several ways. One way is to calculate damage attributable to a customer by using the Wöhler life curve and the Miner-Palmgren theory. A second way is to compare distribution functions of customer and component populations. In an early project phase, with a new component design and final material not being available, failure prediction can be done by using the information about the new geometry and material data from predecessors. In a later stage, prototypes or final material is available and component rig tests are possible to perform. For this case, rig test results of the new components are used as input for.the customer usage failure prediction.

Firstly there will be described a failure prediction method based on material data. The first step in this prediction method is to produce a set of load spectra for each driver-environment combination. The input data for the customer population is a torque / km load spectra matrix in the form of e.g. revolutions at torque level, alternatively a Rainflow matrix / km is produced. This is performed for each individual route as described earlier in the section regarding environments in which the customers are driving. Using the population settings, the load spectra or Rainflow matrix for each driver-environment combination in the population may be obtained.

By complementing with the number of drivers in each combination the customer population is produced. By running a local stress analysis including an initial system analysis where the boundary conditions are produced, it is possible to produce a stress-based load spectra or stress-based Rainflow matrix.

For certain failure modes it is necessary to include a local plastic analysis, such as the fatigue of a differential house.

By using the above in combination with Wöhler data, it is now possible to calculate how many of the drivers in the population will experience a failure after a certain distance. When producing a Rainflow matrix, the torque signal is converted to a stress signal in a first step. In the second step a Rainflow analysis is performed on the stress signal and in the third step a Duty Value $DV_s$ is calculated by using the equation below which is equivalent to the Duty Value calculation in the previous section describing the method for failure prediction in the torque dimension:

$$DV_S = \sum n_k {}^* S_{Rk} {}^{\wedge We}$$

where $S_R$ is the reversed stress amplitude.

For mean stress compensation e.g. Goodman, Gerber or Morrow is used which includes the ultimate tensile strength.

In contrast to the torque-based analysis, it is important to distinguish between components' different torque-stress relationships. For example for a PTU (Power take-off unit) the analysis is performed for both pinion and gear wheel if the torque-stress relationship differs between the two.

A failure prediction method based on customer and component population is described below.

In this method both customer and component populations are created. By using the same input as described in the previous section, the stress-based customer population may be obtained. For the component population, torque history data from physical failure tests are used, either from rig or from vehicle tests. The history data is then converted either to torque load spectra which in turn is converted to stress load spectra, or into stress Rainflow matrices for components.

Once the stress load spectra or stress Rainflow matrices are obtained for all driver-environment combinations in the customer population and for the component failure tests, it is possible to calculate the stress based Duty Value $DV_s$ for each spectrum / Rainflow matrix.

By complementing each Duty Value with the number of drivers in each combination, the customer population is produced. In the same way, a component population is produced. Once both populations are produced, they may be fitted with an appropriate distribution function.

When the fit procedure is finished, the Duty Value $DV_s$ of any customer %-ile or vice versa may be obtained by inverting the chosen cumulative distribution function or using the cdf function respectively. The failure method may then be used to reflect how severe a test failure is for real customer usage.

A failure prediction may be performed in the same way as in the torque dimension by comparing the customer and component populations. The prediction may be done for the entire population, for a certain %-ile or any measured load spectrum or Rainflow matrix. In the failure prediction code, a random population of the customer and component Duty Values are compared based on distribution parameters from the fit process. Components with different torque-stress relationships are distinguished and the failure prediction functionality includes all individual components for a system failure analysis.

The above-described methods may suitably be integrated into a method for the production of an automotive vehicle transmission component. Such a production method may include a first step a) of performing fatigue analysis and service life prediction for a proposed component design using the method for performing fatigue analysis and service life prediction of automotive vehicle transmission components, and a second step b) wherein, if the prediction of step a) produces an acceptable result for the proposed component design, the component is produced in accordance with the proposed design. Having the above knowledge, production of all kinds of automotive vehicle transmission components, such as gears, splines, housings, etc. may be done using conventional production methods known to the person skilled in the art. Should the prediction of step a) produce a result which is not acceptable, alternative component designs may be developed and step a) repeated until a design producing an acceptable result is identified, whereupon the component may be produced in accordance with that design.

The above methods may be implemented in an evaluation tool and the user may perform parameter studies and failure predictions for a variety of applications. It is possible to change the population settings and to choose different distribution functions. The failure analysis may be performed in both torque and stress dimension. The results may be presented both numerically and graphically.

The evaluation tool may be implemented as a computer program or computer program product.

Modifications to embodiments of the invention described in the foregoing are possible without departing from the scope of the invention as defined by the accompanying claims.

Expressions such as "including", "comprising", "incorporating", "consisting of", "have", "is" used to describe and claim the present invention are intended to be construed in a non-exclusive manner, namely allowing for items, components or elements not explicitly described also to be present. Reference to the singular is also to be construed to relate to the plural.

Numerals included within parentheses in the accompanying claims are intended to assist understanding of the claims and should not be construed in any way to limit subject matter claimed by these claims.

**Claims**

1. A method for performing fatigue analysis and service life prediction of automotive vehicle transmission components **characterised in that** it comprises the steps of
producing a customer population through:

     defining driver profiles and driving behaviours;
     defining environments in which drivers of said driver profiles are driving;
     defining driver-environment combinations through combining said driver profiles and said defined environments;
     defining road conditions;
     using an algorithm for random selection of two driver -environment combinations;

   defining a component population;
   fitting the customer and component populations with appropriate distribution functions;
   producing duty values for the customer and component populations respectively; performing a component failure prediction by comparing the duty values for the customer and component populations such that a failure is predicted if the customer duty value is larger than the component duty value.

2. A method according to claim 1, **characterised in that** the step of defining driver profiles and driving behaviours further comprises the steps of:

     defining at least two driving behaviours, selected from the group of: aggressive driving, moderate driving and mild driving.

3. A method according to claim 2, **characterised in that** the step of defining driver profiles and driving behaviours further comprises the steps of:

     defining said at least two driving behaviours such that, aggressive driving is assumed to reflect a 90%-ile customer, 90%-ile in this case used in the sense of reflecting aggressiveness level of driving behaviour that equals the 90th driver of 100 where the 100th is the most aggressive, and moderate driving is assumed to reflect a 50 - 70%-ile customer, 50 - 70%-ile in this case used in the sense of reflecting aggressiveness level of driving behaviour that equals the 50th - 70th driver of 100 where the 100th is the most aggressive, and mild driving is assumed to reflect a <50%-ile customer, <50%-ile in this case used in the sense of reflecting aggressiveness level of driving behaviour that is lower than the 50th driver of 100 where the 100th is the most aggressive.

4. A method according to any one of claims 2 to 3, **characterised in that** the step of defining driver profiles and driving behaviours further comprises the steps of:

     defining at least two driver profiles, selected from the group of: aggressive profile, moderate profile and mild profile.

5. A method according to claim 4, **characterised in that** the step of defining driver profiles and driving behaviours further comprises the steps of:

     defining said at least two driver profiles by mixing driving behaviours for each profile such that aggressive profile consists of 40% aggressive driving, 50% moderate driving and 10% mild driving, moderate profile consists of 10% aggressive driving, 70% moderate driving and 20% mild driving, and mild profile consists of 5% aggressive driving, 20% moderate driving and 75% mild driving.

6. A method according to claim 5, **characterised in that** the step of defining driver profiles and driving behaviours further comprises the steps of:

defining driver type distributions as a share of the population.

7. A method according to claim 6, **characterised in that** the step of defining driver profiles and driving behaviours further comprises the steps of:

defining driver type distributions as a share of the population according to 10% aggressive drivers, 40% moderate drivers and 50% mild drivers.

8. A method according to claim 1, **characterised in that** it further comprises the step of defining the environments in which drivers of said driver profiles are driving as at two or more of the following:

City - City road loop, inner city; Rural - Rural road loop, plain highway and rural road mix; Mountainous - Mountainous road loop, hilly highway and rural road mix; Gravel - Gravel road loop, mix of gravel roads at vehicle speeds of approximately 30-70 km/h; Highway - Plain and hilly highway mix; Autobahn - Main test track loops, hard accelerations and top speed driving; Hill start - Test track hill start, 16%-inclination and 20%-inclination driving mix; and Trailer driving - Test track full load + trailer driving, mix of handling track / city track / gravel track including 20%- inclination hill start.

9. A method according to claim 1, **characterised in that** the step of defining driver-environment combinations through combining said driver profiles and said defined environments further comprises the steps of:

combining driver types and environments to combinations with specific frequency of occurrence, such that two or more of the following combinations are defined: Road to Rig driver; Mix driver; Plain city driver; Plain autobahn driver; Plain rural road driver; Plain mountainous road driver; City driver; City-trailer driver; Rural driver; Rural-trailer driver; Mountainous driver; Mountainous-trailer driver; Gravel driver; Gravel-trailer driver; Highway driver; Highway-trailer driver; Autobahn driver; Autobahn-trailer driver; Trailer driver; Average driver.

10. A method according to claim 1, **characterised in that** it further comprises the step of defining the road conditions as:

dry, wet and snow / ice, where the distributions are defined as share of a total road distance.

11. A method for the production of an automotive vehicle transmission component **characterised in that** it comprises the steps of:

a) performing fatigue analysis and service life prediction for a proposed component design using the method according to any one of the preceding claims; and
b) if the prediction of step a produces an acceptable result for said proposed component design producing said component in accordance with the proposed design.

12. A computer program, which is stored on a computer readable storage media, and which is suitable to perform the method of claim 1 when it is run on a digital computer.

13. A computer program product, which is directly loadable into the internal memory of a digital computer, and which comprises a computer program for performing the method of claim 1 when said program is run on said computer.

Fig. 1

Fig. 2

**EP 1 777 647 A1**

**European Patent Office**

**DECLARATION**

which under Rule 45 of the European Patent Convention shall be considered, for the purposes of subsequent proceedings, as the European search report

**Application Number**

EP 05 02 2405

| The Search Division considers that the present application, does not comply with the provisions of the EPC to such an extent that it is not possible to carry out a meaningful search into the state of the art on the basis of all claims | CLASSIFICATION OF THE APPLICATION (IPC) |
|---|---|
| Reason: | G06Q10/00 |

The claims of the application are considered to relate to subject matter excluded from patentability under Art. 52(2) and (3) EPC and formulated to merely specify commonplace features relating to a technological implementation of such matter to such an extent that a meaningful search is not possible. The examiner could not determine any technical solution defined in response to a problem within the content of the application as originally filed. Any problems which are addressed do not appear to require a technical solution. Whilst the implementation of such solutions may include the use of generic technical features these merely serve their well known functions as would be recognised by the skilled person in the technical field under consideration.

The applicant's attention is drawn to the fact that a search may be carried out during examination following a declaration of no search under Rule 45 EPC, should the problems which led to the declaration being issued be overcome (see EPC Guideline C-VI, 8.5).

-----

| Place of search | Date | Examiner |
|---|---|---|
| The Hague | 7 December 2005 | Pinheiro, T. |

EPO FORM 1504 (P04C37)

14

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2003065482 A